# EUROPEAN PATENT SPECIFICATION

(11) **EP 1 808 582 B1**
(45) Date of publication and mention of the grant of the patent: **28.07.2010**
(21) Application number: 06000821.6
(22) Date of filing: 16.01.2006
(51) Int. Cl.: F01N 3/05, F01N 3/22, F02D 41/02, F01N 3/32

(54) **Method and arrangement for cooling an exhaust system**
Verfahren und Anordnung für Kühlung eines Abgassystems
Méthode et arrangement pour le refroidissement d'un système d'échappement

(43) Date of publication of application: 18.07.2007
(73) Proprietor: Ford Global Technologies, LLC, Dearborn, MI 48126 (US)
(72) Inventor: Wassmur, Robert, 43443 Kungsbacka (SE)
(74) Representative: Hammond, Andrew David

(56) References cited:
- GB-A- 1 372 943
- GB-A- 1 513 460
- US-A- 4 438 627
- US-A- 5 493 858
- US-A- 5 753 188
- US-B1- 6 192 678

## Description

### TECHNICAL FIELD

The present invention relates to an arrangement for cooling an exhaust system of a vehicle having an internal combustion engine. Moreover, the present invention also concerns a secondary air injection system comprising such an arrangement and an automotive vehicle comprising such a secondary air injection system. Further, the present invention also relates to a method for cooling an exhaust system of a vehicle having an internal combustion engine.

### BACKGROUND OF THE INVENTION

In the field of motor vehicles which are operated by means of internal combustion engines it is a general requirement that the concentration of harmful substances in the engine's exhaust gas should be as low as possible. These harmful substances are mainly present in the form of unburnt residues of hydrocarbons (HC), oxides of nitrogen (NOx) and carbon monoxide (CO). In today's motor vehicles equipped with gasoline engines, a purification of the exhaust gas is normally carried out by means of a catalytic converter, or catalyst, arranged in the exhaust system. In the contemporary so-called three-way catalyst, the major part of the above-mentioned harmful substances is eliminated by means of various well-known catalytic reactions.

GB 1,372,943 describes a secondary air pump driven by the engine comprising:
- means (70) for detecting an elevated temperature condition of the exhaust system (16);
- means for detecting a predetermined engine operating status;
- pump means for selectively producing an airflow;
- valve means for selectively allowing the airflow to be injected into said exhaust system; and
- control means arranged to, in response to a detected elevated temperature condition during a detected predetermined engine status, cause the pump means to produce airflow and the valve means to allow the airflow to be injected into the exhaust system.

In addition, evaporative emissions occur when, for example, on hot days gasoline heats up and evaporates from both the gasoline tank and wherever fuel may be present throughout the engine. They are also released from a hot engine and exhaust system when the car is running and/or idling. After the car is turned off, the engine still remains hot for a period of time, and gas vaporizes then, as well, even when the car is parked. This condition is called "hot soak".

An engine experiences a hot soak condition when the engine load is reduced or the engine is shut down after a period of operation at high engine load. Residual heat of the exhaust system and the engine heats the atmosphere in the engine compartment and the heat of the engine and exhaust system is allowed to soak back into the fuel system. Engine and fuel system component temperatures are elevated during such a condition, or in the so-called hot soak condition. The fuel system in the engine compartment may be heated above a temperature which causes vapour lock or percolation of fuel in the fuel system located near the intake system of the engine. Furthermore, pressure may build in the fuel system. If any of the fuel injectors dribbles, excess gas is likely to build up in the engine, making it hard to start. Still further, components arranged at or close to the exhaust system of the engine may suffer negative effects due to overheating thereof during the conditions described above.

A prior art apparatus, US4327674, for cooling a vehicle engine compartment comprises a motor-driven fan to cool the engine, circuit means adapted to drive the fan in the stopped condition of the engine, and a temperature switch means operably connected with said circuit means and actuated to drive the fan by detecting a hot soak condition of the engine compartment, whereby said fan is driven for a predetermined period when the engine is stopped after a heavy load operation.

A technical problem encountered with utilization of the air stream from an engine cooling fan as described above is that, although the above-mentioned arrangement results in a cooling of the exhaust system, it is not satisfactory either because of the space requirements of the ducting required to convey the air stream from the fan back to the engine exhaust or, conversely, to convey the engine exhaust forward to the air stream from the fan. Furthermore, the cooling fan will, in the prior art apparatus above, have to be run for a rather long period of time in order to provide for sufficient cooling during a hot soak condition.

### SUMMARY OF THE INVENTION

An object of the present invention is to provide an improved arrangement for cooling an exhaust system of a vehicle having an internal combustion engine, which has limited space requirements and is potentially less costly and complex to manufacture and has improved efficiency and operating characteristics and eliminates or at least reduces the effects of the above discussed problems as well as contributes to reducing evaporative emissions.

According to a first aspect of the present invention this object is achieved in accordance with claim 1, which specifies that the arrangement comprises: means for detecting an elevated temperature condition of said exhaust system; means for detecting a predetermined engine operating status; pump means for selectively producing an airflow; valve means for selectively allowing said airflow to be injected into said exhaust system; control means arranged to, in response to a detected elevated temperature condition during a detected predetermined engine status, cause said pump means to produce said airflow and said valve means to allow said airflow to be injected into said exhaust system.

A quick and efficient cooling of an exhaust system of a vehicle having an internal combustion engine is achieved through this injection of air into the exhaust system of the vehicle in response to a detected elevated temperature condition during a detected predetermined engine status.

Also, said predetermined engine status to be detected by this arrangement is either of an engine shutdown, a stopped or an idling status of said engine.

Detection of either of an engine shutdown, a stopped or an idling status of said engine as a requisite for injecting the cooling airflow will reduce the risk of unintentionally injecting air into the exhaust system during other engine operating statuses, which might have an impairing effect on engine performance or even cause elevated exhaust temperatures, counteracting the desired effect.

More optionally, said elevated temperature condition to be detected by this arrangement is a so-called hot soak condition after heavy load operation of said engine.

Detection of this so-called hot soak condition after heavy load operation of said engine as a requisite for injecting the cooling airflow will contribute in counteracting the negative effects normally associated with the so-called hot soak condition as well as to component protection, especially of components arranged at or close to the exhaust system, and the reduction of evaporative emissions.

According to a second aspect of the present invention, there is provided a secondary air injection system for an internal combustion engine comprising an arrangement according to the first aspect of the invention.

This is advantageous as basing the cooling arrangement on a conventional secondary air injection system, which is likely to anyway be present in the engine design, will reduce the cost and complexity of implementing an arrangement in accordance with the present invention.

According to a third aspect of the present invention, there is provided an automotive vehicle comprising a secondary air injection system for an internal combustion engine according to the second aspect of the invention.

This is advantageous as a conventional secondary air injection system is likely to anyway be present in the engine design of a newly produced automotive vehicle, whereby the cost and complexity of implementing an arrangement in accordance with the present invention will be low. Furthermore, it will also be possible to upgrade the engine control unit of already existing automotive vehicles having conventional secondary air injection system through adding only minor amendments to the control scheme of the components thereof.

According to a fourth aspect of the present invention there is provided a method for cooling an exhaust system of a vehicle having an internal combustion engine.

Further embodiments are listed in the additional dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
- Figure 1: is a schematic illustration of an arrangement for cooling an exhaust system of a vehicle having an internal combustion engine according to the present invention; and
- Figure 2: is a schematic illustration of the steps of a method for cooling an exhaust system of a vehicle having an internal combustion engine in accordance with the present invention.

Still other objects and features of the present invention will become apparent from the following detailed description considered in conjunction with the accompanying drawings.

It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

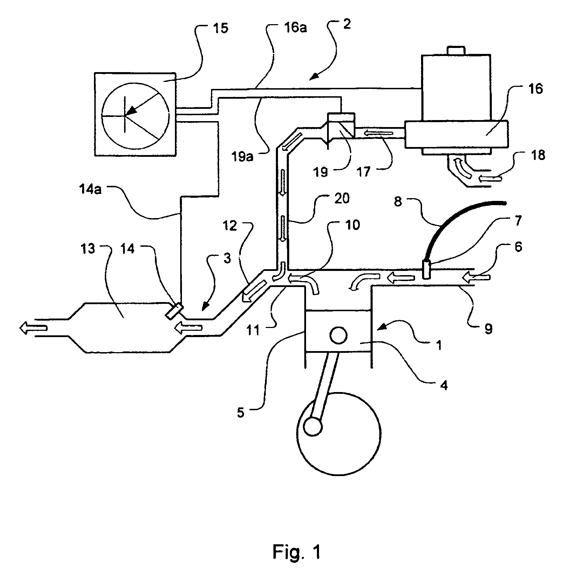

Referring to Figure 1, there is illustrated schematically a simplified view of an internal combustion engine 1 having an arrangement 2 for cooling an associated exhaust system 3 in accordance with a preferred embodiment of the present invention. A piston 4 is shown arranged within a cylinder 5 of the engine 1 in conventional manner. Fuel is injected into an air stream, illustrated by arrows 6, by means of a fuel injector 7 and its associated hosing 8. The fuel is injected into the air stream 6 inside an inlet manifold 9 of the engine 1 and mixes with the air stream 6, where after the air/fuel mixture in the inlet manifold 9 is introduced into the cylinder 5 by means of one or more inlet valves, not shown, in conventional manner. Following compression of the air/fuel mixture by the piston 4 the mixture is ignited to drive the piston 4 in conventional manner. Thereafter the produced exhaust gases, illustrated by arrows 10, are allowed to leave the cylinder by means of one or more exhaust valves, not shown, opening up a passage out into an outlet manifold 11 in conventional manner. The outlet manifold 11 is arranged to convey the exhaust gases 10 into one or more pipes 12 of the exhaust system 3 of the vehicle, of which exhaust system 3 figure 1 only illustrates schematically the initial piping 12 and a catalytic converter 13.

The arrangement 2 further comprises means 14 for detecting an elevated temperature condition of the exhaust system 3, such as one or more temperature sensors 14, which may be arranged at one or several locations along the extension of the exhaust system 3. These temperature condition detecting means 14 are arranged to communicate with a control unit 15, such as an engine control unit (ECU), e.g. via control wiring 14a. The elevated temperature condition these means 14 are arranged to detect is preferably a so-called hot soak condition after heavy load operation of the engine 1.

As described in the background of the invention an engine experiences a hot soak condition when the engine load is reduced or the engine is shutdown after a period of operation at high engine load. For further information on the so called hot soak condition reference is made to the background of the invention section.

Note that there are various methods for indicating when exhaust temperature reaches a pre-selected value. For example, an exhaust temperature sensor can be used which e.g. measures exhaust manifold temperature. Alternatively, the engine control unit can estimate exhaust temperature based on various operating conditions such as, for example: intake air temperature, engine speed, ignition timing, and engine air/fuel ratio. It will be obvious to the person skilled in the art that any one or a combination of the above discussed methods may be used for implementing a detection of the so called hot soak condition.

The arrangement 2 further comprises means 15 for detecting a predetermined engine operating status. These means 15 are preferably arranged to be an integral part of the engine control unit (ECU). The predetermined engine status to be detected is preferably either of an engine shutdown status, a stopped status (i.e. the engine status following engine shutdown) or an idling status of the engine 1, which statuses as further described in the background of the invention section are the engine statuses where hot soak is most likely to occur.

The arrangement 2 further comprises pump means 16 for selectively producing an airflow, illustrated by arrows 17, drawn e.g. from ambient air, illustrated by arrows 18, and valve means 19 for selectively allowing the produced airflow 17 to be injected into the exhaust system 3. The pump means 16 preferably consist of an electrical air pump 16 and the valve means 19 preferably consist of a check valve 19. The air pump 16 as well as the valve 19 are preferably arranged to be under the control of a control unit 15, e.g. via control wiring 16a, 19a. The control unit 15 is preferably an integral part of the engine control unit (ECU).

The airflow 17, which usually has the temperature of the ambient air 18, may be arranged to be injected into the exhaust system 3 via a supply channel 20, which is attached to one or more of: a cylinder head of the engine 1; an exhaust manifold 11 of the exhaust system 3; exhaust pipes 12 of the exhaust system 3, or further via a supply channel arranged in a cylinder head of the engine 1.

The control means 15, which preferably are integral parts of the engine control unit (ECU), are arranged to, in response to a detected elevated temperature condition during a detected predetermined engine status, cause the pump means 16 to produce the airflow 17 and the valve means 19 to allow the airflow 17 to be injected into the exhaust system 3. Introduction of the airflow 17, having essentially the temperature of the ambient air, into the hot exhaust system 3 promotes cooling thereof and thus reduces the effect of so called soak back, which might otherwise cause undesired heating of the engine 1 or neighbouring components.

The arrangement for cooling an exhaust system 3 of a vehicle having an internal combustion engine 1 in accordance with the present invention is preferably realized using a conventional secondary air injection system. Such a system is, as is well known to the person skilled in the art, normally used in order to shorten the time required for the catalyst to reach the so-called "light-off temperature", which is done through injecting secondary air into the exhaust gas. This secondary air is mixed with the exhaust gas immediately downstream of the engine's exhaust valves, resulting in an oxidation of the mixture consisting of the exhaust gases and the secondary air. The oxidation process is mainly due to the hydrogen which is present in the exhaust gases. The oxidation reaction generates a high amount of heat energy which is guided through the exhaust pipe 12 and fed to the catalyst 13, which subsequently becomes heated more rapidly.

This secondary air function is necessary during cold starts as the catalysts commonly used today provide a very high degree of exhaust purification at the appropriate operating temperature of the catalyst, i.e. a conversion of harmful exhaust gas components to carbon monoxide and water. However, from cold start a certain time period of heating is required in order for the catalyst to reach the operating temperature at which an optimum degree of purification may be obtained. The so-called "light-off temperature" of the catalyst is approximately 200-350°C and may be defined as the temperature at which the catalyst provides a 50% degree of purification of a certain harmful component in the exhaust gases. During the initial warm-up phase of the catalyst, which e.g. may be approximately 30-90 seconds, the catalyst cannot operate in an optimum manner as regards the elimination of the harmful substances in the exhaust gases.

This preferred embodiment, comprising use of a conventional secondary air injection system, is based on the realization that the conventional secondary air injection system, originally envisaged for the purpose of heating the exhaust system 3, may be utilized for cooling of the same with only minor amendments to the control scheme of the components thereof.

Using such a conventional secondary air injection system the pump means 16 may be a secondary air injection pump 16 of the secondary air injection system, which is arranged to pump ambient air 18 into the exhaust system 3. Furthermore, the valve means 19 may be a valve 19 of the secondary air injection system. The control means 15 is preferably an integral part of the engine control unit (ECU) of the vehicle, adding to the engine control unit (ECU) the control scheme for realising cooling of the exhaust system 3 in accordance with the present invention.

Basing the cooling arrangement 2 on a conventional secondary air injection system, which is likely to anyway be present in the engine design, will reduce the cost and complexity of implementing an arrangement in accordance with the present invention.

A conventional secondary air injection system is normally arranged in connection with an internal combustion engine 1 for the above described purpose. Such an engine 1 is arranged to be supplied with an air/fuel mixture via an intake manifold 9. The engine exhaust 11 is connected to a catalytic converter 13, which preferably is a conventional three-way catalyst which is adapted to reduce the harmful substances carbon monoxide (CO), hydrocarbon (HC) and oxides of nitrogen (NOx) which are present in the exhaust gas 10. The exhaust gas 10 is discharged from the engine via an exhaust pipe 12. As the person skilled in the art should be thoroughly familiar with the above engine arrangement, further detail is not presented here.

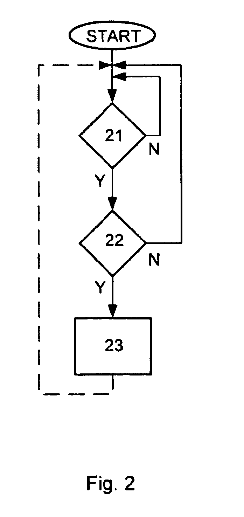

Referring now to figure 2, there is illustrated schematically in a flowchart the steps of a method for cooling an exhaust system 3 of a vehicle having an internal combustion engine 1 in accordance with the present invention. Once the system is started, in one step 21 it is detected if an elevated temperature condition of the exhaust system 3 exists. The elevated temperature condition may be a so-called hot soak condition after heavy load operation of the engine. If detected, the flow follows the arrow path marked Y to an additional step 22, which may be performed simultaneously with the above step, and in which an engine operating status, such as either of an engine shutdown, a stopped or an idling status of the engine, is detected. In response to a detected elevated temperature condition during a detected predetermined engine status the flow follows the arrow path marked Y to a step of causing pump means 16 to produce an airflow 17 and valve means 19 to allow the airflow 17 to be injected into the exhaust system 3. Injection of air 17 may be maintained for a predetermined period of time or until a sufficiently low temperature of the exhaust system 3 has been achieved, as illustrated by the dashed loop-back arrow of the figure 2 flowchart. Should the engine 1 be operated outside of the pre-determined operating statuses, e.g. outside either of an engine shutdown, a stopped or an idling status, injection of air into the exhaust system 3 should normally be cancelled.

In a preferred embodiment of the method in accordance with the present invention the pump means 16 being caused to produce the airflow 17 is a secondary air injection pump 16 of a secondary air injection system for an internal combustion engine 1 and the valve means 19 arranged to allow the airflow 17 to be injected into the exhaust system 3 is a valve 19 of this secondary air injection system.

The above described arrangement 2 and method for cooling an exhaust system 3 of a vehicle having an internal combustion engine 1 using an arrangement 2 and method in accordance with the present invention, preferably comprising a secondary air injection system is useful on all internal combustion engines or so-called "Otto" engines and will prevent or reduce the effects of so called soak back using injection of secondary air into the exhaust system thereof. The arrangement 2 enables a reliable cooling system to be designed whilst keeping the cost as low as possible, especially when an already present secondary air injections system is used for the implementation of the inventive arrangement 2 and method.

In accordance with the present invention there is also envisaged a secondary air injection system for an internal combustion engine 2 having a secondary air injection pump 16, which is arranged to be controlled by an engine control unit 15, which secondary air injection system comprises an arrangement 2 in accordance with the present invention and as described above.

Furthermore, in accordance with the present invention there is envisaged an automotive vehicle having an internal combustion engine 1 having a secondary air injection system comprising an arrangement 2 in accordance with the present invention and as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An arrangement (2) for cooling an exhaust system (3) of a vehicle having an internal combustion engine (1), wherein said arrangement comprises:
means (14) for detecting an elevated temperature condition of said exhaust system (3);
means (15) for detecting a predetermined engine operating status; pump means (16) for selectively producing an airflow (17);
valve means (19) for selectively allowing said airflow (17) to be injected into said exhaust system (3); and
control means (15) arranged to, in response to a detected elevated temperature condition during a detected predetermined engine status, cause said pump means (16) to produce said airflow (17) and said valve means (19) to allow said airflow (17) to be injected into said exhaust system (3); and
**characterized by** said elevated temperature condition being a so-called hot soak condition after heavy load operation of said engine (1);and
said predetermined engine status being either of an engine shutdown, a stopped or an idling status of said engine (1).

2. An arrangement (2) according to claim 1, wherein said pump means (16) is an electrical air pump (16).

3. An arrangement (2) according to any one of claims 1 to 2, wherein said valve means (19) is a check valve (19).

4. An arrangement (2) according to any one of claims 1 to 3, wherein said arrangement further comprises a supply channel (20) and said airflow (17) is arranged to be injected into said exhaust system (3) via said supply channel (20) which is attached to one or more of: a cylinder head of said engine (1); an exhaust manifold (11) of said exhaust system (3); exhaust pipes (12) of said exhaust system (3), or further via a supply channel arranged in a cylinder head of said engine (1).

5. A secondary air injection system for an internal combustion engine (1), wherein it comprises an arrangement (2) according to any one of claims 1 to 4, where said pump means (16) is a secondary air injection pump (16) of said secondary air injection system and said valve means (19) is a valve (19) of said secondary air injection system and said control means (15) is part of an engine control unit of said vehicle.

6. An automotive vehicle having an internal combustion engine (1), wherein it comprises a secondary air injection system for an internal combustion engine (1) according to claim 5.

7. A method for cooling an exhaust system (3) of a vehicle having an internal combustion engine (1), wherein it comprises the steps of:
detecting an elevated temperature condition of said exhaust system (3), wherein said elevated temperature condition is a so-called hot soak condition after heavy load operation of said engine (1);
detecting a predetermined engine operating status, wherein said predetermined engine status is either of an engine shutdown, a stopped or an idling status of said engine (1).;
in response to said detected elevated temperature condition during said detected predetermined engine status, causing pump means (16) to produce an airflow (17) and valve means (19) to allow said airflow (17) to be injected into said exhaust system (3).

8. A method according to claim 7, wherein said pump means (16) being caused to produce an airflow (17) is a secondary air injection pump (16) of a secondary air injection system for an internal combustion engine (1) and said valve means (19) arranged to allow said airflow (17) to be injected into said exhaust system (3) is a valve (19) of said secondary air injection system for an internal combustion engine (1).

## Patentansprüche

1. Anordnung (2) zum Kühlen eines Abgassystems (3) eines Fahrzeugs, das eine Brennkraftmaschine (1) besitzt, wobei die Anordnung umfasst:
Mittel (14), um einen Zustand erhöhter Temperatur des Abgassystems (3) zu detektieren;
Mittel (15), um einen vorgegebenen Maschinenbetriebsstatus zu detektieren;
Pumpmittel (16), um wahlweise eine Luftströmung (17) zu erzeugen;
Ventilmittel (19), um wahlweise zuzulassen, dass die Luftströmung (17) in das Abgassystem (3) eingeleitet wird; und
Steuermittel (15), die dazu ausgelegt sind, in Reaktion auf den detektierten Zustand erhöhter Temperatur während eines detektierten vorgegebenen Maschinenstatus die Pumpmittel (16) dazu zu veranlassen, die Luftströmung (17) zu erzeugen, und die Ventilmittel (19) dazu zu veranlassen, die Einleitung des Luftstroms (17) in das Abgassystem (3) zuzulassen; und
**dadurch gekennzeichnet, dass**
der Zustand erhöhter Temperatur ein so genannter durchgewärmter Zustand nach einem Hochlastbetrieb der Maschine (1) ist; und
der vorgegebene Maschinenstatus entweder ein Abschalten der Maschine, ein angehaltener Zustand oder ein Leerlaufzustand der Maschine (1) ist.

2. Anordnung (2) nach Anspruch 1, wobei die Pumpmittel (16) eine elektrische Luftpumpe (16) sind.

3. Anordnung (2) nach einem der Ansprüche 1 bis 2, wobei die Ventilmittel (19) ein Rückschlagventil (19) sind.

4. Anordnung (2) nach einem der Ansprüche 1 bis 3, wobei die Anordnung ferner einen Versorgungskanal (20) umfasst und die Luftströmung (17) dazu ausgelegt ist, in das Abgassystem (3) über den Versorgungskanal (20), der an einem oder mehreren der folgenden Elemente befestigt ist: einem Zylinderkopf der Maschine (1); einem Abgaskrümmer (11) des Abgassystems (3); Abgasrohren (12) des Abgassystems (3), oder über einen Versorgungskanal, der in einem Zylinderkopf der Maschine (1) angeordnet ist, eingeleitet zu werden.

5. Sekundärluft-Einleitungssystem für eine Brennkraftmaschine (1), wobei es eine Anordnung (2) nach einem der Ansprüche 1 bis 4 enthält, wobei die Pumpmittel (16) eine Sekundärluft-Einleitungspumpe (16) des Sekundärluft-Einleitungssystems sind und die Ventilmittel (19) ein Ventil (19) des Sekundärluft-Einleitungssystems sind und die Steuermittel (15) ein Teil einer Maschinensteuereinheit des Fahrzeugs sind.

6. Kraftfahrzeug mit einer Brennkraftmaschine (1), wobei es ein Sekundärluft-Einleitungssystem für eine Brennkraftmaschine (1) nach Anspruch 5, enthält.

7. Verfahren zum Kühlen eines Abgassystems (3) eines Fahrzeugs, das eine Brennkraftmaschine (1) besitzt, wobei es die folgenden Schritte umfasst:
Detektieren eines Zustands erhöhter Temperatur des Abgassystems (3), wobei der Zustand erhöhter Temperatur ein so genannter durchgewärmter Zustand nach einem Hochlastbetrieb der Maschine (1) ist;
Detektieren eines vorgegebenen Maschinenbetriebsstatus, wobei der vorgegebene Maschinenstatus entweder ein Abschalten der Maschine, ein angehaltener Zustand oder ein Leerlaufzustand der Maschine (1) ist;
in Reaktion auf den detektierten Zustand erhöhter Temperatur während des detektierten vorgegebenen Maschinenstatus Veranlassen der Pumpmittel (16), eine Luftströmung (17) zu erzeugen, und der Ventilmittel (19), die Einleitung der Luftströmung (17) in das Abgassystem (3) zuzulassen.

8. Verfahren nach Anspruch 7, wobei die Pumpmittel (16), die dazu veranlasst werden, eine Luftströmung (17) zu erzeugen, eine Sekundärluft-Einleitungspumpe (16) eines Sekundärluft-Einleitungssystems für eine Brennkraftmaschine sind und die Ventilmittel (19), die dazu ausgelegt sind, die Einleitung der Luftströmung (17) in das Abgassystem (3) zuzulassen, ein Ventil (19) des Sekundärluft-Einleitungssystems für eine Brennkraftmaschine (1) sind.

## Revendications

1. Montage (2) pour le refroidissement d'un système d'échappement (3) d'un véhicule avec un moteur (1) à combustion interne, dans lequel ledit montage comprend :
des moyens (14) pour détecter une situation de température élevée dudit système d'échappement (3) ;
des moyens (15) pour détecter un statut de régime moteur prédéterminé ;
des moyens de pompe (16) destinés à produire un flux d'air (17) de manière sélective ;
des moyens de vanne (19) destinés à autoriser de manière sélective l'injection dudit flux d'air (17) dans ledit système d'échappement (3) ; et
des moyens de commande (15) prévus pour, en réponse une situation de température élevée détectée pendant un statut de régime moteur prédéterminé détecté, provoquer la production dudit flux d'air (17) par lesdits moyens de pompe (16) et l'autorisation par lesdits moyens de vanne (19) d'injection dudit flux d'air (17) dans ledit système d'échappement (3) ; et
***caractérisé par le fait que*** ladite situation de température élevée est une situation dite d'imprégnation à chaud après un fonctionnement sous forte charge moteur dudit moteur (1) ; et
ledit statut moteur prédéterminé est soit un arrêt du moteur, soit un état arrêté ou de ralenti dudit moteur (1).

2. Montage (2) selon la revendication 1, dans lequel lesdits moyens de pompe (16) sont une pompe à air électrique (16).

3. Montage (2) selon l'une quelconque des revendications 1 à 2, dans lequel lesdits moyens de vanne (19) sont un clapet antiretour.

4. Montage (2) selon l'une quelconque des revendications 1 à 3, dans lequel ledit montage comprend en outre un canal d'alimentation (20) et ledit flux d'air (17) est prévu pour être injecté dans ledit système d'échappement (3) par ledit canal d'alimentation (20) qui est relié à l'un ou plusieurs d'entre : une tête de cylindre dudit moteur (1) ; un collecteur d'échappement (11) dudit système d'échappement (3) ; des tuyaux d'échappement (12) dudit système d'échappement (3), ou de plus par un canal d'alimentation placé dans une tête de cylindre dudit moteur (1).

5. Système d'injection d'air secondaire pour un moteur (1) à combustion interne, qui comprend un montage (2) selon l'une quelconque des revendications 1 à 4, dans lequel lesdits moyens de pompes (16) sont une pompe d'injection d'air secondaire (16) dudit système d'injection d'air secondaire, et lesdits moyens de vanne (19) sont une vanne (19) dudit système d'injection d'air secondaire et lesdits moyens de commande (15) sont une partie d'une unité de commande électronique du moteur dudit véhicule.

6. Véhicule automobile possédant un moteur (1) à combustion interne, qui comprend un système d'injection d'air secondaire pour un moteur (1) à combustion interne selon la revendication 5.

7. Procédé de refroidissement d'un système d'échappement (3) d'un véhicule possédant un moteur (1) à combustion interne, comprenant les étapes consistant à :
détecter une situation de température élevée dudit système d'échappement (3), ladite situation de température élevée étant une situation dite d'imprégnation à chaud après un fonctionnement sous forte charge moteur dudit moteur (1) ;
détecter un statut de régime moteur prédéterminé, dans lequel ledit statut de régime moteur prédéterminé est soit un arrêt du moteur, soit un état arrêté ou de ralenti dudit moteur (1) ;
en réponse à ladite situation de température élevée détectée pendant ledit statut de régime moteur prédéterminé, faire produire à des moyens de pompe (16) un flux d'air (17) et faire que des moyens de vanne (19) permettent audit flux d'air (17) d'être injectés dans ledit système d'échappement (3).

8. Procédé selon la revendication 7, dans lequel lesdits moyens de pompe (16) à qui l'on fait produire un flux d'air (17) sont une pompe à injection d'air secondaire (16) d'un système d'injection d'air secondaire pour un moteur (1) à combustion interne, et lesdits moyens de vanne (19) prévus pour permettre audit flux d'air (17) d'être injectés dans ledit système d'échappement (3) sont une vanne (19) dudit système d'injection d'air secondaire pour un moteur (1) à combustion interne.
